# EUROPÄISCHE PATENTSCHRIFT

(11) **EP 2 337 658 B1**
(45) Veröffentlichungstag und Bekanntmachung des Hinweises auf die Patenterteilung: **29.08.2012**
(21) Anmeldenummer: 09778310.4
(22) Anmeldetag: 03.09.2009
(51) Int. Cl.: B27G 1/00

(54) **AUTOMATISCHES FLICKEN VON FLÄCHIGEN, TEXTURIERTEN GEGENSTÄNDEN, WIE HOLZPANEELEN MIT ÄSTHETISCHER REKONSTRUKTION**
AUTOMATIC REPAIR OF FLAT, TEXTURED OBJECTS, SUCH AS WOOD PANELS THROUGH AESTHETIC RECONSTRUCTION
RÉPARATION AUTOMATIQUE D'OBJETS TEXTURÉS PLATS TELS QUE DES PANNEAUX EN BOIS, AU MOYEN D'UNE RECONSTRUCTION ESTHÉTIQUE

(30) Priorität: 22.09.2008 DE 102008048383
(43) Veröffentlichungstag der Anmeldung: 29.06.2011
(73) Patentinhaber: Baumer Inspection GmbH, 78467 Konstanz (DE)
(72) Erfinder: MASSEN, Robert, 78337 Öhningen (DE)
(74) Vertreter: Strauss, Steffen
(86) Internationale Anmeldenummer: PCT/EP2009/006390
(87) Internationale Veröffentlichungsnummer: WO 2010/031500

(56) Entgegenhaltungen:
- EP-A- 1 792 696
- EP-A- 1 837 189
- DE-A1- 10 223 831

## Beschreibung

Paneele aus Vollholz oder mit einer Naturholz-Oberfläche werden in sehr grossen Mengen in der Fußbodenindustrie, in der Möbelindustrie sowie in der Architektur eingesetzt. Sehr oft bestehen diese Paneele aufgrund des hohen Preises von Naturholz aus einem Verbund von mehreren Schichten aus Faserplatten oder preiswerteren Hölzern und einer relativ dünnen, sichtbaren Schicht aus Naturholzfurnier oder Naturvollholz, welche für den ästhetischen Eindruck bestimmend ist. Da der Naturwerkstoff Holz immer zahlreiche Fehlstellen wie lose oder faule Astlöcher, angeschnittene Markröhren, Risse usw. aufweist, müssen diese Fehlstellen zur Gewährleistung einer guten physikalischen Qualität der Oberfläche (Ebenheit, Dichtigkeit usw.) lokal geflickt werden.

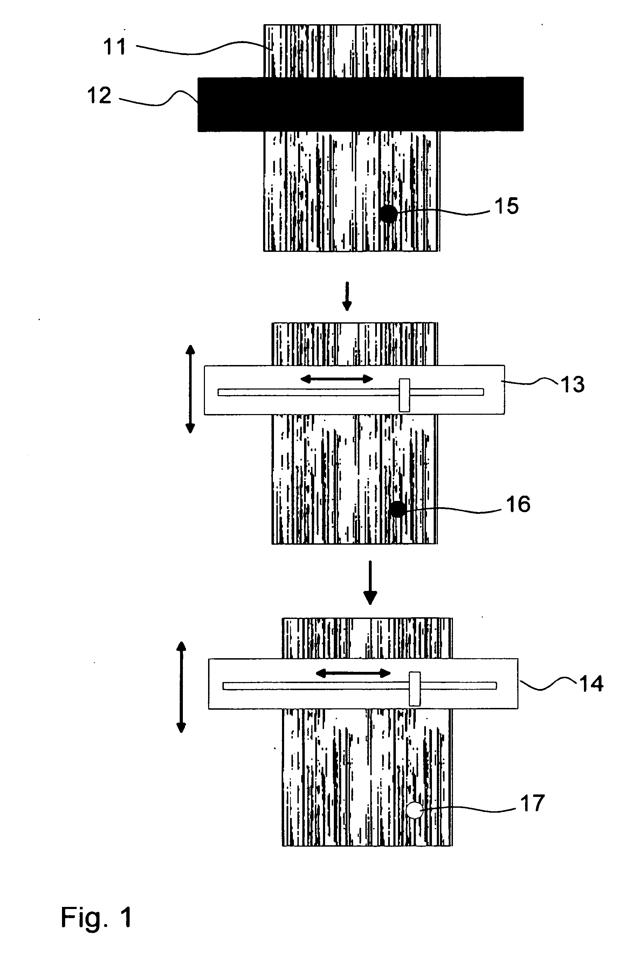

Dieser Prozess wird in den meisten Holzpaneelproduktionen noch manuell durchgeführt. Eine grosse Anzahl von Mitarbeitern inspiziert rein visuell die Oberfläche eines Paneels, fräst mit einem Handwerkzeug die Fehlstellen wie Astlöcher, Markröhren usw. aus und flickt diese ausgefräste Stellen durch Einbringen einer Spachtelmasse oder durch Einschlagen eines vorgefertigten Holzdübels. Manchmal hat dieses Flick-Personal mehrere Spachtelfarben zur Verfügung, so dass sie die der Grundfarbe des Holzes am nächsten kommenden Farbe auswählen können. Trotzdem ist die ästhetische Qualität der geflickten Stelle im Vergleich zu einer fehlerlosen Fläche sehr niedrig. Wie Fig. 1 in einer (aus drucktechnischen Gründen auf eine reine graphische s/w Darstellung beschränkten) Abbildung zeigt, bleibt die in ein Astloch eingebrachte Spachtelmasse störend sichtbar. Die natürliche Textur des Astloches ist ersetzt worden durch eine glatte, homogene Spachteloberfläche. Auch beim Einsetzen eines vorgefertigten Dübels bleiben die Flickstellen überaus sichtbar. Trotz des sehr hohen Personalaufwandes und der damit verbundenen hohen Kosten für das Flicken der in der Regel zahlreichen Fehlstellen eines Paneels sind diese nur rein physikalisch reparierten Paneele in ihrer ästhetischen Qualität bei weitem nicht mehr mit einem fehlerlosen Paneel zu vergleichen und leiden daher unter einer entsprechenden Wertminderung.

Seit kurzem werden automatische Flicksysteme angeboten, welche aus einer Kombination bestehen von einem Bildverabeitungssystem zur Detektion der Fehlstellen auf dem Holzpaneel und einer anschliessenden, Roboterbestückten Anlage zum lokalen Ausfräsen und Einbringen von Spachtelmasse bzw. von Dübel.

Die norwegische Firma Argus Control SA ("http://www.argoscontrol.no") bietet ein "Argos Panel Repair System" an, welches aus einem optischen s/w Scanner besteht zur Detektion und Lokalisierung der zu reparierenden Fehlstellen sowie einem numerisch angesteuerten XYZ-Achsen System zum Ausfräsen und Ausspachteln der Fehlstellen.

Die Fa. Baumer Inspection GmbH, Konstanz (http://www.baumerinspection.com) bietet unter der Bezeichnung ColourBrain®-Putty ebenfalls automatische Flicksysteme an, welche aus einem speziellen, multisensoriellen Scanner bestehen sowie einem automatischen Fräs- und Spachtel-System bzw. Dübel-Setzsystem.

Beide genannten Systeme sind in der Lage, die Kosten und den Zeitbedarf für das physikalische Flicken von Paneelen mit einer Holzoberfläche im Vergleich zur rein manuellen Vorgehensweise zu senken. Dennoch bleiben bei bisher bekannten Systemen die Flickstellen aufgrund der Unterbrechung der Oberflächentextur sichtbar.

Um das optische Erscheinungsbild der ausgebesserten Holzoberfläche nicht zu beeinträchtigen, liegt der Vorrichtung und dem Verfahren zum Ausbessern einer Fehlstelle in einem Holzwerkstück gemäß der EP 1 792 696 ein Flicksystem zu Grunde, welches im Anschluss an den automatisierten Flickvorgang mit Hilfe einer Vorrichtung in die Flickstelle einen Flicken aus Holz mit einer Maserung einsetzt. Dabei wird die Maserung des Flickens parallel zur Maserung der auszubessernden Holzoberfläche ausgerichtet.

Nachteil dieser Vorrichtung und dieses Verfahrens ist, dass trotz der parallelen Ausrichtung der Maserung des Flickens zur Maserung der auszubessernden Holzoberfläche die Flickstelle, insbesondere an den Übergängen zur auszubessernden Holzoberfläche, sichtbar ist, da weder die Hintergrundfarbe des Flickens noch die Farbe, die Dichte und der Krümmungsverlauf der Maserung des Flickens mit der Hintergrundfarbe der Holzoberfläche sowie der Farbe, der Dichte und dem Krümmungsverlauf der Maserung der Holzoberfläche abgestimmt sind.

Es besteht daher ein hohes wirtschaftliches und technisches Interesse an einem automatischen Holzpaneel-Flicksystem, welches in der Lage ist, nicht nur die physikalische Qualität der Holzpaneele durch einen Flickvorgang in der Weise zu reparieren, dass das optische Erscheinungsbild der ausgebesserten Holzoberfläche nicht beeinträchtigt wird, sondern auch eine ästhetische Qualität der geflickten Paneele herzustellen, welche der eines fehlerlosen Paneel möglichst nahe kommt.

Diese Aufgabe wird durch den Gegenstand der unabhängigen Ansprüche gelöst. Vorteilhafte Ausgestaltungen und Weiterbildungen der Erfindung sind in den jeweiligen abhängigen Ansprüchen angegeben.Die Aufgabe wird erfindungsgemäß dadurch gelöst, indem die automatisch zu reparierenden Paneele durch folgende Verfahrensschritte untersucht werden:
1. mit mindestens einem für die Detektion der physikalischen Fehlstellen erforderlichen bildgebenden Abtaster, im folgenden "Fehler-Abtaster" genannt, werden die physikalischen Fehlstellen im Paneel ermittelt,
2. mit mindestens einem weiteren, vorzugsweise farbtüchtigen bildgebenden Abtaster, im folgenden "Ästhetik-Abtaster" oder "Textur-Abtaster" genannt, werden aus dem Gesamtbild des Paneels beschreibende Merkmale für den globalen ästhetischen Eindruck, insbesondere für den Farbeindruck und den visuellen Eindruck der Musterung, beziehungsweise der Textur mit Verfahren der automatischen Bildauswertung berechnet,
3. unter Nutzung der Positions- und Forminformationen der Fehlstellen, welche mit dem Fehler-Abtaster gewonnen wurden, werden aus dem Bild des Ästhetik-Abtasters Bildausschnitte der jeweiligen Fehlstellen gewonnen, wobei diese Bildausschnitte jeweils die Fehlstellen selbst und ihr näheres Umfeld umfassen und aus diesen Bildausschnitten werden mit Verfahren der automatischen Bildauswertung beschreibende Merkmale für den lokalen ästhetischen Eindruck berechnet,
4. nach dem Flicken der physikalischen Fehlstellen durch automatisches Ausfräsen, Einbringen von Spachtelmasse oder Dübel oder anderen physikalischen Reparaturtechnologien wird die Region jeder geflickten Fehlstelle mit einer numerisch oder rechnergesteuert positionierbaren, elektronisch bildpunktweise ansteuerbaren Dekorations-Einrichtung unter Nutzung der für den globalen ästhetischen visuellen Eindruck des Panels zuständigen Merkmale als auch der für den lokalen ästhetischen Eindruck der betroffenen Fehlstellen zuständigen Merkmale individuell so dekoriert, daß das Paneel an der Stelle der reparierten Fehlstelle einen einem fehlerlosen Paneel möglichst nahe kommenden visuellen Eindruck aufzeigt und/oder dass das gesamte geflickte Paneel einen durch die Wahl der lokalen Dekorationsmuster hervorgerufenen, gewünschten ästhetischen Gesamteindruck aufzeigt.

Mit der Erfindung wird so ein Verfahren zum automatischen Flicken von Fehlstellen insbesondere in natürlich gemusterten Flächen bereitgestellt, bei welchen die lokale Ausbesserung ein im Vergleich zur fehlerfreien Fläche ansonsten einen visuell störenden Eindruck hinterlässt, wobei hier durch Rekonstruktion oder Imitation der Textur auf der Fehlstelle diese möglichst unauffällig ausgebessert wird.

Bei den oben angegebenen Verfahrensschritten sind zwei bildgebende Abtaster vorgesehen. Diese können jedoch auch in einem einzelnen Abtaster vereint sein.

Anders beschrieben wird allgemein zur Durchführung des Verfahrens zum automatischen Flicken einer texturierten Oberfläche eines flächigen Gegenstands
- die mit zumindest einer Fehlstelle behaftete texturierte Oberfläche des flächigen Gegenstands, wie etwa eines Paneels mittels eines bildgebenden Abtaster erfasst,
- mittels einer Recheneinrichtung zumindest der Ort, vorzugsweise auch die Größe und/oder die Form der Fehlstelle anhand der mit dem bildgebenden Abtaster aufgenommenen Bilddaten erfasst,
- die Fehlstelle mittels eines rechnergesteuerten Flickwerkzeugs geflickt, beispielsweise durch Einfügen einer Spachtelmasse mit gegebenenfalls vorherigem Entfernen von Material der Oberfläche,
- anhand der Bilddaten die Textur der Oberfläche erfasst, und
- mittels der Recheneinrichtung eine die Textur der Oberfläche imitierende strukturierte Färbung ermittelt und
- mit einer Dekorations-Einrichtung rechnergesteuert die zuvor ermittelte, die Textur der Oberfläche imitierende Färbung auf die geflickte Fehlstelle aufgetragen.

Eine entsprechende automatische Flickvorrichtung zur Ausbesserung von Fehlstellen in texturierten Oberflächen flächiger Gegenstände umfasst dazu die folgenden Einrichtungen:
- zumindest ein bildgebender Abtaster zum Aufnehmen eines typischerweise digitalen Bildes der texturierten Oberfläche,
- eine Recheneinrichtung, welche an den bildgebenden Abtaster angeschlossen ist, so dass die Bilddaten des bildgebenden Abtasters an die Recheneinrichtung übertragen und von dieser ausgewertet werden können, wobei die Recheneinrichtung dazu eingerichtet ist, aus den empfangenen Bilddaten zumindest den Ort, vorzugsweise auch die Größe und/oder die Form einer Fehlstelle zu erfassen, sowie anhand der Bilddaten die Textur der Oberfläche, insbesondere in Umgebund der Fehlstelle zu erfassen, und eine die Textur der Oberfläche imitierende strukturierte Färbung zu ermitteln,
- eine mit der Recheneinrichtung verbundene automatische Flickeinrichtung, welche die Fehlstelle flickt und welche mit der Recheneinrichtung verbunden ist und von der Recheneinrichtung anhand der von der Recheneinrichtung ermittelten Ortskoordinaten, gegebenenfalls auch der Daten der ermittelten Form und/oder Größe der Fehlstelle angesteuert wird, sowie
- eine Dekorations-Einrichtung, welche ebenfalls mit der Recheneinrichtung verbunden ist, um gesteuert durch die Recheneinrichtung die zuvor von der Recheneinrichtung ermittelte, die Textur der Oberfläche imitierende Färbung auf die geflickte Fehlstelle aufzutragen.

Das Entfernen von Material der Oberfläche an der Fehlstelle kann beispielsweise durch Ausbohren oder Ausfräsen erfolgen. Ist die Fehlstelle eine rein farbliche Störung der Textur, kann gegebenenfalls auch eine deckende Beschichtung der Fehlstelle ohne Entfernung von Material in Frage kommen, um die Fehlstelle zu verbergen.

Um mittels der Recheneinrichtung ein Bild der auf die Fehlstelle aufzutragenden Färbung zu ermitteln, kann gemäß einer einfachen Ausführungsform der Erfindung aus den Bilddaten der Textur ein geeigneter Bereich geklont werden.

Als Bestandteil der Dekorationseinrichtung zur Erzeugung indvidueller Texturierungen sind erfindungsgemäß Matrixdruck-Vorrichtungen, die also ein Druckbild durch rechnergesteuertes Setzen von einzelnen Bildpunkten erzeugen, vorgesehen. Hierbei eignen sich insbesondere Drop-on-Demand-Druckvorrichtungen, wie etwa Tintenstrahldrucker. Ein derartiger Drucker kann leicht nahezu beliebige Texturierungen individuell rechnergesteuert erzeugen.

Um eine möglichst unauffällige Ausbesserung, beziehungsweise eine möglichst realistische Imitation der Textur zu erzielen, ist in vorteilhafter Weiterbildung der Erfindung die Recheneinrichtung dazu eingerichtet, bei der Ermittlung der die Textur der Oberfläche imitierenden strukturierten Farbgebung Texturelemente in die geflickte Fehlstelle fortzusetzen. Dabei wird also der Verlauf der Strukturelemente angrenzender intakter Oberflächenbereiche ermittelt und die aufzubringende Farbgebung, beispielsweise in Form von Bilddaten derart errechnet, dass diese Texturelemente enthält, welche an die vorhandenen Texturelemente anschließen. Mit anderen Worten wird unter Einbeziehung der Textur der an die Fehlstelle angrenzenden Oberflächenbereiche eine Textur innerhalb der Fehlstelle von der Recheneinrichtung errechnet, welche die angrenzende Textur extrapoliert.

Hierzu gibt es verschiedene Möglichkeiten. Eine einfache Möglichkeit liegt darin, dass ein Referenz-Bildausschnitt der Oberfläche, vorzugsweise in der Umgebung der Fehlstelle geklont und dann angepasst wird. Um die Strukturen der Textur und des Bildausschnitts möglichst in Deckung zu bringen, kann der Bildausschnitt dann in geeigneter Weise deformiert werden. Hierzu eignen sich ein- oder zweiseitige Streckungen und Stauchungen, Drehungen, Skalierungen und Scherungen.

Gemäß einer weiteren Ausführungsform der Erfindung wird zur Erzeugung eines Imitats der Textur ein Referenz-Ausschnitt der Textur, also etwa ein Bild eines Teils der Textur an einer intakten Stelle der Oberfläche verwendet. Selbstverständlich kann der Referenz-Ausschnitt auch an einer anderen Oberfläche mit der entsprechenden Textur oer auch synthetisch gewonnnen werden. Vorteilhaft für in gutes Imitat der Textur ist lediglich, dass der Referenz-Ausschnitt eine für die Texturierung der Oberfläche typische Strukturierung aufweist. Es wird ein Bild der Textur rekursiv generiert, indem zu einem neu zu bestimmenden Bildelements, beispielsweise in Form eines einzelnen Pixels oder mehrerer Pixel eine Umgebung zuvor bereits bestimmter Pixel ausgewählt wird.

Dann wird ein Bildelement in Form dieser Umgebung im Referenz-Ausschnitt gesucht, welches in den Farbwerten den Farbwerten der Umgebung des neu zu bestimmenden Bildelements möglichst entspricht. Hier können beispielsweise Summen, vorzugsweise gewichtete Summen der Farbwerte korespondierender Pixel miteinander verglichen werden. Ist die Abweichung der Summen kleiner als ein vorgegebener Grenzwert, wird das Bildelement im Referenz-Ausschnitt als gültig angenommen. Allgemeiner gesagt, ist das Bildelement im Referenz-Ausschnitt dann gefunden, wenn diese in den Farbwerten den Farbwerten der Umgebung des neu zu bestimmenden Bildelements so weit entspricht, dass die Abweichung der Farbwerte korrespondierender Pixel kleiner als ein vorbestimmter Grenzwert ist.

Nun wird im Referenz-Ausschnitt das Bildelement gesucht, welches in örtlicher Relation dem neu zu bestimmenden Bildelement zu dessen zugehriger Umgebung entspricht. Die Farbwerte dieses Bildelement werden dann in das zu bestimmende Texturbild an die entsprechende Stelle bezüglich der Umgebung eingetragen. Das Verfahren wird dann mit einem Bildelement wiederholt, welches vorzugsweise an das zuvor bestimmte Bildelement angrenzt. Durch die Wiederholung dieser Verfahrensschritte wird so das Bild sukzessive mit Farbwerten gefüllt.

Auch dieser Algorithmus kann verwendet werden, um vorhandene Texturen aus der Nachbarschaft in die Bereiche der Fehlstelle hinein zu extrapolieren. Dazu wird von Bilddaten ausgegangen, die neben dem Bereich der Fehlstelle auch angrenzende Bereiche mit der noch vorhandenen Textur enthalten. Bei der Bestimmung der Farbwerte der Umgebung eines neu zu ermittelnden Bildbereichs werden dann diese Texturbereiche mit in die Umgebung einbezogen, so dass aus dem Referenz-Ausschnitt dann zu dieser noch neben der Fehlstelle vorhandenen Textur passende Bildelemente gesucht und in das Bild der aufzutragenen Färbung eingetragen werden.

Der Erfindungsgedanke sei beispielhaft aber nicht einschränkend anhand von einer typischen Fehlstelle, einem Astloch, in einer Holzoberfläche erklärt, Hierzu werden folgende Abbildungen genutzt:
Fig. 1 Verfahrensschritte zum Flicken von Holzpaneelen mittels einer automatischen Flickanlage.
Fig. 2 zeigt eine fehlerbehaftete Holzoberfläche.
Fig. 3 zeigt die Fehlstelle der in Fig 2 dargestellten Holzoberfläche nach dem Flicken.
Fig. 4 Verfahrensschritte zum Flicken von Holzpaneelen mittels einer automatischen Flickanlage mit ästhetischer Imitation der Oberflächentextur.

Die Fig. 5A bis 5C zeigen Verfahrensschritte zum Ermitteln und Aufbringen einer Färbung mit Texturelementen auf der Fehlstelle, welche vorhandene Texturelemente in der Umgebung der Fehlstelle fortsetzen.

In den Fig. 6A bis 6C sind Verfahrensschritte zur Imitation der Maserung in einem geflickten Bereich einer Steinplatte dargestellt, bei welchen die Textur durch mehrere kleinere Bildelemente rekursiv ergänzt wird.

Fig. 1 zeigt vereinfacht eine automatische Flickanlage für Paneele mit einer Naturholzoberfläche 11 nach dem Stand der Technik, bestehend aus einem s/w Scanner 12 zur Erkennung der physikalischen Fehler 15 und zur Messung ihrer Position, einem ersten kartesischen XYZ-Manipulator 13 zur Bewegung einer Fräse an die Fehlstellen 16, einem zweiten kartesischen XYZ-Manipulator 14 zur Bewegung eines Spachteleinspritzwerkzeugs an die ausgefräste Fehlstelle - 17. Hinsichtlich der Schritte des Flickens kann eine derartige Vorrichtung auch für das erfindungsgemäße Verfahren, beziehungsweise als Bestandteil der erfindungsgemäßen Vorrichtung eingesetzt werden.

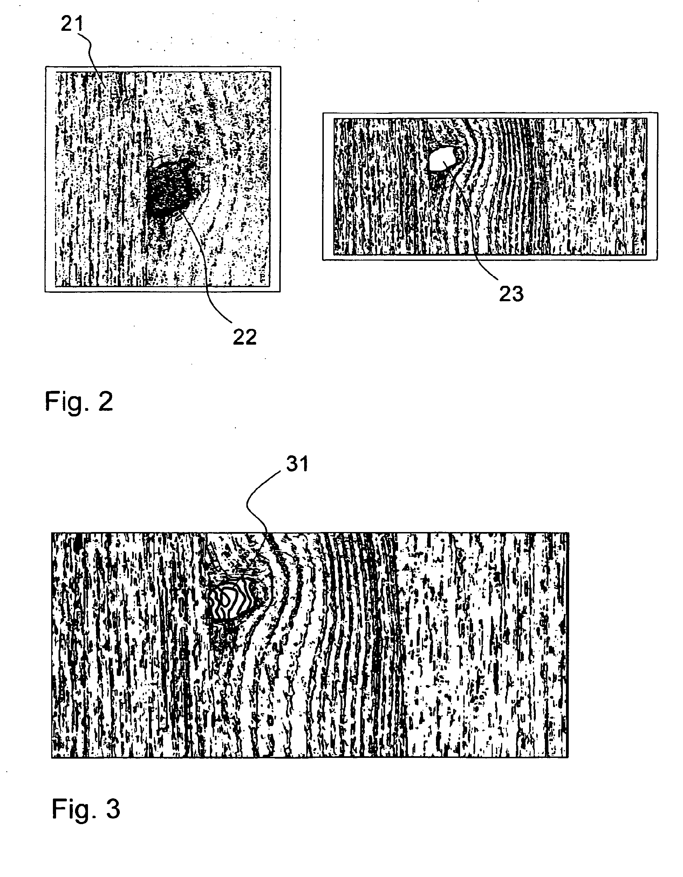

Fig. 2 zeigt eine Holzoberfläche 21 mit einem faulen, ausgefallenen Astloch vor 22 und nach 23 dem Flicken durch Verspachteln. Die Fehlstelle ist aufgrund der homogenen, nicht gemusterten Spachtelmasse des geflickten Astlochs 23 visuell sehr auffällig und störend erkennbar, selbst wenn der Farbton der Spachtelmasse dem Farbton der Holzoberfläche gut angepasst ist.

Fig. 3 zeigt die Fehlstelle nach der erfindungsgemäßen Dekoration durch Rekonstruktion oder Imitation der natürlichen Holzmaserung mit Hilfe eines Tintenstrahl-Druckes, vereinfacht als s/w Strichgraphik dargestellt

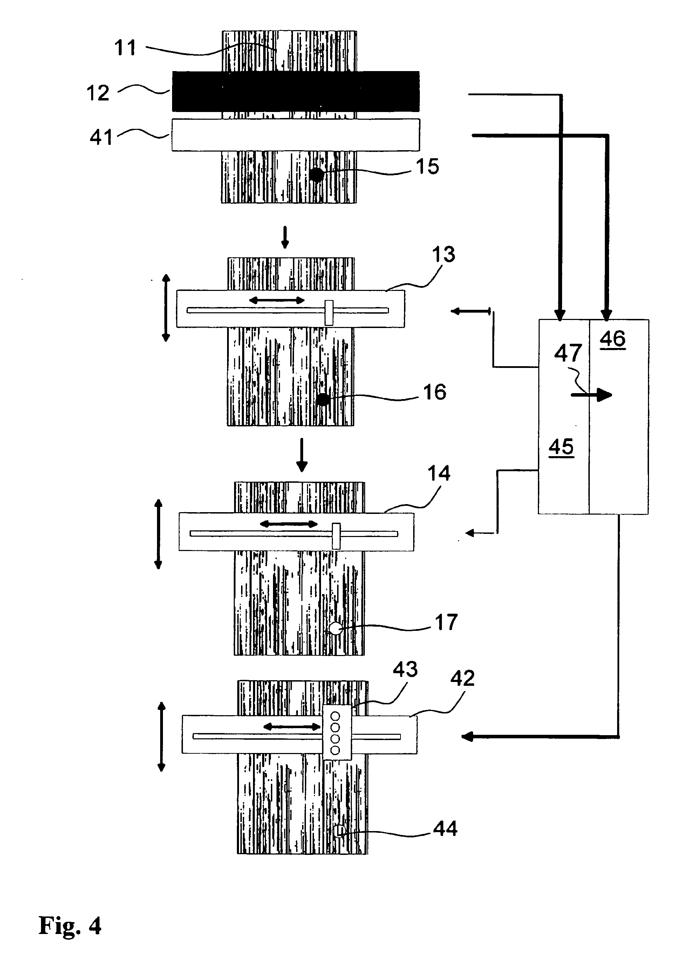

Fig. 4 zeigt eine automatische Flickanlage mit der erfindungsgemäßen automatischen ästhetischen Rekonstruktion für Paneele 11 mit einer Naturholzoberfläche, umfassend einen s/w Scanner 12zur Erkennung der Fehler 15 und zur Messung ihrer Position, welcher die Rohbilddaten zur Auswertung an den Bildrechner 45 überträgt, welcher durch Bildauswertung die Informationen ermittelt zur Ansteuerung des ersten kartesischen XYZ-Manipulator 13 zur Bewegung einer Fräse an die Fehlstellen und zum Ausfräsen dieser Fehlstelle 16 sowie die Informationen zur Ausspachtelung der ausgefrästen Fehlstellen an einen zweiten kartesischen XYZ-Manipulator 14 zur Bewegung eines Spachteleinspritzwerkzeugs an die ausgefrästen Fehlstellen 17 überträgt , ferner einem farbtüchtigen Scanner 41 zur Erfassung des Paneels , welcher die Bilddaten an einen Bildrechner 46 überträgt zur Ermittlung sowohl der globalen ästhetischen Merkmale des Paneels als auch der lokalen ästhetischen Merkmale in der Region jeder Fehlstelle, wobei die Positions- und Forminformationen der Fehlstellen über den Datenweg 47 vom Rechner 45 an den Rechner 46 übertragen werden, einem dritten, vom Rechner 46 angesteuerten kartesischen XYZ Manipulator 42 zur Bewegung und Ansteuerung eines Tintenstrahldruckkopfes 43 zur lokalen Dekoration der jeweiligen Fehlstellen.

Ein Holzpaneel mit einer zu flickenden Fehlstellen wird nach dem Stand der Technik wie in Fig. 1 verdeutlicht mit Hilfe eines achromatischen bildgebenden Abtasters 12 auf das Vorhandensein von physikalischen Fehlstellen, im Beispiel ein Astloch 15 untersucht. Hierbei werden Formund Positionsinformationen der Fehlstelle ermittelt und an eine numerisch positionierbare Fräse 13 übertragen. Diese Positionierungseinheit sei beispielsweise mit einem kartesischen XYZ-Manipulator realisiert. Die Positionen beziehen sich auf ein Paneel-gebundenes Koordinatensystem, beispielsweise die vordere linke Ecke.

Nach dem Ausfräsen wird das Paneel in eine zweite Einheit bewegt, bei welcher ein Spachtelkopf numerisch an die Fehlstellenposition bewegt wird und dort die Ausfräsung füllt.

Die bis zu 8 qm grossen Paneele enthalten in der Regel zahlreiche Fehlstellen. Es ist auch möglich, statt kartesischen Positionierungen Schwenkarm-Roboter einzusetzen.

Nach dem Spachteln wird in der Regel die gesamte Paneeloberfläche überschliffen und mit einem transparenten Schutzlack versehen.

Wie in Fig. 2 beispielhaft an einem Paneel -21- mit einem dunklen Astloch -22- verdeutlicht, ist diese Fehlstelle nach dem Verspachteln immer noch störend sichtbar, da die glatte Spachtelmasse -23- sogar bei ausgewähltem Farbton eine im Gegensatz zur speziellen Holzmaserung glatte Fläche aufzeigt.

Erfindungsgemäß wird daher, wie in Fig. 3 exemplarisch gezeigt, mit einem numerisch positionierbaren farbtüchtigen Tintenstrahl-Druckkopf ein solches Muster und eine solche Farbgebung auf die glatte Fehlstelle aufgedruckt, daß die natürliche Struktur der Umgebung über die Fehlstelle sich fortsetzt und die Farbe sowohl der Umgebung der Fehlstelle als auch dem gesamten Farbeindruck des Paneels angepasst ist.

Hierzu wird wie in Fig. 4 gezeigt, eine automatische Flickstation nach dem Stand der Technik um eine Recheneinrichtung mit folgenden Einheiten erweitert:
mit einem zusätzlichen , in der Regel farbtüchtigen Bildgeber 41 wird ein Farbbild des gesamten Paneels erstellt und eine Auswerteeinheit 46 übertragen
mit einer zusätzlichen Positioniereinheit -42- wird ein numerisch ansteuerbarer Dekorationskopf, beispielsweise ein farbtüchtiger Tintenstrahl-Druckkopf an die glatt gespachtelten Fehlstellen geführt und druckt dort ein dekoratives Muster auf die störenden glatten Stellen. Die Positionsinformationen werden dabei von dem Auswerterechner 45, welcher die Bildsignale des Abtasters 12 auswertet an den Dekorationsrechner 46 über einen interne oder externe Datenstrecke 47 übertragen.

Es ist selbstverständlich, dass der Druckvorgang vorzugsweise an dem nach dem Spachteln überschliffenem Paneel durchgeführt wird, um scharfe und prägnante dekorative Muster zu erhalten.

Die Bestimmung der dekorativen Muster folgt dabei zwei Richtlinien:
a) aus dem Gesamtbild des farbtüchtigen Abtasters werden die globalen ästhetischen Merkmale wie dominierender Farbton, Farbtonstatistik sowie die entsprechenden Merkmale der Holzmaserung bestimmt. Solche Verfahren sind dem Fachmann der Inspektion von Naturholz bekannt. Diese Merkmale steuern den generellen Farbton des Tintenstrahldruckers für den Holzhintergrund als auch für die Maserungen.
b) aus dem Ausschnittsbild um jede Fehlstelle werden die lokalen ästhetischen Merkmale der Holzmaserung ermittelt wie beispielsweise lokaler Hintergrundfarbe, Farben der Maserung an dieser Stelle, Dichte, Richtung und Krümmungsverlauf der Maserung usw.

Es ist möglich, mittels einer Computersimulation diese Merkmale über Parameter zu steuern, so dass sowohl ein gewünschter lokaler wie auch globaler Eindruck des Holzpaneels entsteht

Soll beispielsweise ein rustikales Paneel nach dem Flicken entstehen, so wird man Fehlstellen eher so dekorieren, dass sie Astlöcher, Harzgallen o.ä. Elemente imitieren. Soll ein fein-strukturiertes edles Paneel entstehen, so wird man geflickte Astlöcher vorwiegend so dekorieren, dass die natürliche Maserung über die Spachtelstelle fortgesetzt wird.

Damit gestattet es das erfindungsgemäße Verfahren nicht nur, Paneele so zu flicken, dass keine störenden Spachtelstellen sichtbar bleiben. Über die elektronische Kontrolle des Dekorationsprozesses kann das globale Aussehen des Paneels durch eine entsprechende lokale Dekoration der Spachtelstellen gesteuert werden und damit aus Paneelen mit einer niedrigen natürlichen ästhetischen Qualität solche mit einer hohen ästhetischen Qualität erzeugt werden. Dies ist sowohl ein grosser wirtschaftlicher als auch ein ökologischer Vorteil der es gestattet, niedrige Holzqualitäten besser zu nutzen.

Die Gewinnung und Erzeugung solcher Merkmale ist dem Fachmann der Computer-Simulation bekannt. 3D Simulationsprogramme wie etwa 3D Studio Max oder Alias Wavefront verfügen heute alle über Texturgeneratoren, mit welchen sich farbige Texturen von natürlichen Werkstoffen wie Holz simulieren lassen bzw. aus vorliegenden Bildern extrahieren lassen. Diese sind über Parameter in vielfältiger Hinsicht steuerbar.

Der numerisch steuerbare Dekorationsprozess ist erfindungsgemäß nicht auf die Verwendung von Tintenstrahl-Drucktechnologien beschränkt. Auch Thermotransferdrucker, einfache Manipulatoren mit einer Hochtemperaturspitze zum lokalen Ansengen der Holzoberfläche sind Bestandteil des Erfindungsgedanken.

Der Erfindungsgedanke umfasst daher die Gesamtheit aller zur dekorativen Veränderung einer geflickten Fehlstelle eines Holzpaneels geeigneten Matrixdruck-Verfahren. Es ist naheliegend, diesen Erfindungsgedanken auch auf andere Naturprodukte wie Naturstein, Marmor sinngemäß anzuwenden.

Der Erfindungsgedanke ist nicht auf das Flicken durch Spachteln oder Dübeln beschränkt. Er umfasst alle Reparaturtechnologien für lokale physikalische Fehler in ästhetischen Flächen, beispielsweise auch das Ausschäumen, das lokale Abtragen, das Abdecken mittels einer deckenden Schicht, usw..

Der Erfindungsgedanke umfasst alle bildgebenden Abtaster wie Matrix- und Zeilenkameras, spektral selektive Kamera, flying-Spot Scanner, 3D Scanner und multisensorielle Abtaster, welche ein elektronisches Abbild der zu flickenden Oberfläche liefern.

Der Erfindungsgedanke umfasst auch Abtaster, welche in der Lage sind, gleichzeitig Fehlstellen zu detektieren und die ästhetischen Merkmale der Oberfläche zu gewinnen. Demgemäß ist die Aufteilung in zwei getrennte Abtaster, wie sie in Fig. 4 dargestellt ist, optional.

Der Erfindungsgedanken umfasst auch die zusätzliche lokale Dekoration nicht fehlerhafter Stellen mit geeigneten Muster, um dem Paneel ein gewünschtes Aussehen zu verleihen. So kann z.B. ein wenig strukturiertes Paneel durch zusätzliche Dekoration mit Astloch-Muster und/ oder Harzgallen-Dekors an wenig strukturierten Stellen ein rustikales Aussehen verliehen werden und somit ein neues Produkt erzeugt werden.

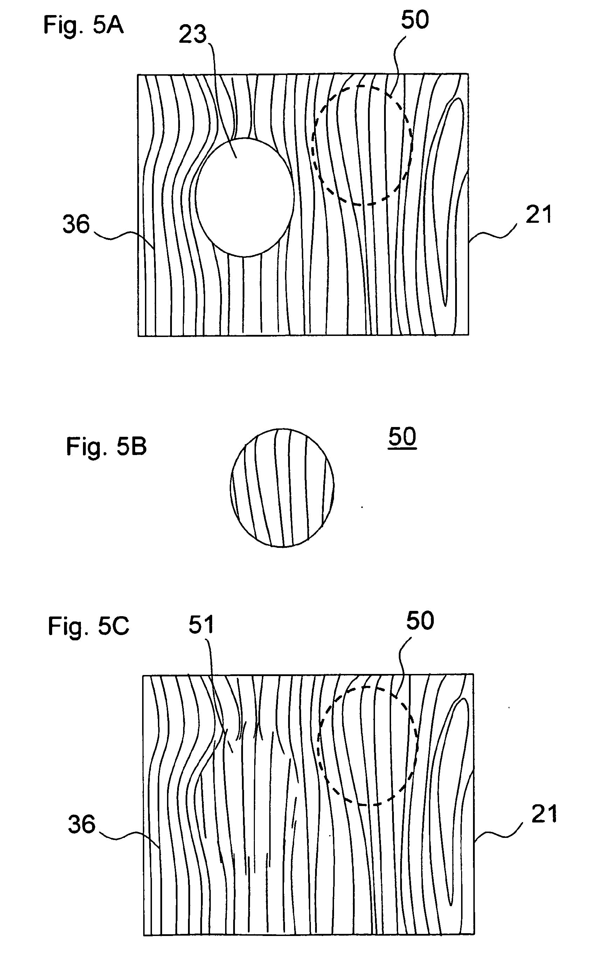

Die Fig. 5A bis 5C zeigen Verfahrensschritte zum Ermitteln und Aufbringen einer Färbung mit Texturelementen auf der Fehlstelle, welche vorhandene Texturelemente in der Umgebung der Fehlstelle fortsetzen.

Fig. 5A zeigt zunächst ein Ausschnitt der Oberfläche eines mit Spachtelmasse 23 geflickten Holzpaneels 21. Die Textur der Oberfläche wird durch die Zuwachszonen der Holzmaserung mit dunklen Spätholzlinien 36 bestimmt.
Zur Ermittlung einer geeigneten strukturierten Färbung des von der Spachtelmasse ausgefüllten Bereiches wird nun von der Recheneinrichtung nach einem Ausschnitt der Textur aus den Bilddaten gesucht, welcher zur Fortsetzung der Textur geklont wird. Mit anderen Worten werden der Dekorationseinrichtung Bilddaten der Aufnahme eines intakten Oberflächenbereichs zugeführt, deren Farbinformation von dieser dann auf die Fehlstelle aufgedruckt wird.

Fig. 5B zeigt einen in Fig. 5A gestrichelt eingezeichneten Bildbereich einer intakten Textur des Paneels 21, welcher für das Klonen ausgewählt wurde und in seiner Form der ausgefüllten Fehlstelle entspricht.

Fig 5C zeigt das Paneel mit dem auf die Fehlstelle durch die Dekorations-Einrichtung erfolgten Aufdruck 51 des Bereichs 50. Der Bereich 50 wurde für den Aufdruck leicht gestreckt und überlappt mit der an die Fehlstelle angrenzenden Textur. Hier kann eine verbesserte Anpassung noch dadurch erfolgen, indem der Bereich 50 noch so gedreht, gestaucht, gestreckt und/oder geschert wird, dass eine bestmögliche Anpassung an die angrenzende Textur erfolgt. Beispielsweise können dazu die Linienprofile an den Rändern der angrenzenden Textur und des Bereichs 50 aufeinander angepasst werden. Zudem können die markanten Texturelemente der umgebenden Textur, hier also die Spätholzlinien 36 noch teilweise durch Farbe überdeckt und die aufgedruckten, imitierten Spätholzlinien zum Rand des Aufdrucks 51 hin abgeschwächt werden, so dass die tatsächlichen und die aufgedruckten Linien sanft ineinander übergehen.

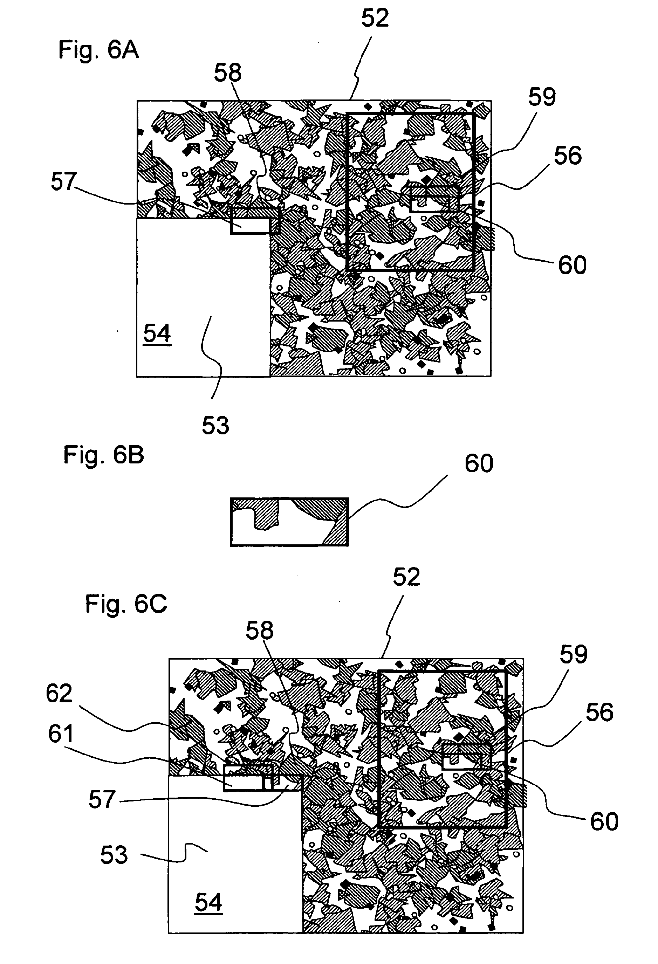

Eine weitere Möglichkeit der Imitation der Maserung im ausgebesserten Bereich liegt darin, die Textur durch mehrere kleinere Bildelemente zu ergänzen. Ein Beispiel eines solchen Verfahrens, bei dem rekursiv kleinere aufeinander abgestimmte Bildbereiche ergänzt werden, zeigen die Fig. 6A bis 6C

Zunächst wird wieder ein Referenz-Ausschnitt der Textur gewählt. Als Beispiel dient hier eine Steinplatte 52, beispielsweise eine Granitplatte. Einen Ausschnitt der Oberfläche mit einer bereits mit Spachtel 53 geschlossenen Fehlstelle 54 zeigt Fig. 6A. Das im Folgenden erläuterte Verfahren ist aber auch auf andere Texturen, wie beispielsweise die Maserung eines Holzpaneels entsprechend anwendbar.

Zunächst wird ein Referenz-Ausschnitt 56 der Textur aus den Bilddaten des bildgebenden Abtasters bestimmt.

Es soll nun für den mit Spachtelmasse 53 bedeckten Bereich 54 der Oberfläche eine strukturierte Farbgebung ermittelt werden, welche möglichst der Textur des Referenz-Ausschnitts 56 gleichkommt. Der Einfachheit halber entspricht hier das Bild der zu bestimmenden Farbwerte, welche dann an die Dekorationseinrichtung gesendet werden, in Form und Größe dem gespachtelten Bereich der Fehlstelle 54.

Zusätzlich wäre es wünschenswert, wenn die Textur am Rand des gespachtelten Bereichs nicht unterbrochen wird. Die Farbgebung sollte daher so sein, dass sich die Formelemente der Textur der die Spachtelmasse umgebenden Bereiche in die Fehlstelle hinein kontinuierlich fortsetzen.

Es wird nun von der Recheneinrichtung die Position eines neu zu bestimmendes Bildelements 57 und eine an das Bildelement 57 angrenzende Umgebung 58 festgelegt. Das Bildelement 57 ist am Rand der Fehlstelle angeordnet, so dass in der Umgebung 58 Teile der intakten Textur vorhanden sind.

Dann wird ein Bildelement 59 in Form dieser Umgebung 58 im Referenz-Ausschnitt 56 gesucht, welches in den Farbwerten den Farbwerten der Umgebung 58 des neu zu bestimmenden Bildelements 57 möglichst gut entspricht. Mit dem auf diese Weise gefundenen Bildelement 59 kann nun die Position eines Bildelements 60 festgelegt werden. Dieses Bildelement 60 hat die gleiche Relativposition zum Bildelement 59, wie das neu zu bestimmende Bildelement 57 in Relation zur Umgebung 58. Mit anderen Worten wird hier im Referenz-Ausschnitt das Bildelement 60 gesucht, welches in örtlicher Relation dem neu zu bestimmenden Bildelement 57 zu dessen zugehöriger Umgebung 58 entspricht.

Fig. 6B zeigt dazu vergrößert das aufgefundene Bildelement 60.

Die Farbwerte dieses Bildelements 60 werden dann in das zu bestimmende Texturbild an die entsprechende Stelle bezüglich der Umgebung, also in das Bildelement 57 eingetragen. Dieser Zustand ist in Fig. 6C dargestellt. Nach dem Eintrag der Farbwerte des Bildelements 57 wird dann die Position eines weiteren, angrenzenden Bildelements 61 mit Umgebung 62 festgelegt. Diese Umgebung 62 beinhaltet nun auch Teile der imitierten Textur. Es wird wie zuvor in Bezug auf das Bildelement 57 wieder eine geeignete Umgebung 59 im Referenz-Ausschnitt 56 gesucht und das örtlich zugehörige Bildelement 60 bestimmt, dessen Farbwerte dann wieder in das Bildelement 61 eingetragen werden. Dieses Verfahren wird vorzugsweise wiederholt, bis das für die Ansteuerung der Dekorationseinrichtung vorgesehene Bild mit Farbwerten gefüllt ist.

## Patentansprüche

1. Verfahren zum automatischen Flicken einer texturierten Oberfläche eines flächigen Gegenstands, bei welchem
- die mit zumindest einer Fehlstelle (15, 16) behaftete texturierte Oberfläche des flächigen Gegenstands, wie etwa eines Paneels (11) mittels zumindest eines bildgebenden Abtaster erfasst,
- mittels einer Recheneinrichtung (45) zumindest der Ort, vorzugsweise auch die Größe und/oder die Form der Fehlstelle (15, 16) anhand der mit dem bildgebenden Abtaster aufgenommenen Bilddaten erfasst,
- die Fehlstelle (15, 16) mittels eines rechnergesteuerten Flickwerkzeugs geflickt, beispielsweise durch Einfügen einer Spachtelmasse (53) mit gegebenenfalls vorherigem Entfernen von Material der Oberfläche,
- anhand der Bilddaten die Textur der Oberfläche erfasst, **dadurch gekennzeichnet, dass**
- mittels der Recheneinrichtung (46) eine die Textur der Oberfläche imitierende Färbung ermittelt und
- mit einer Dekorations-Einrichtung, welche eine Matrixdruck-Vorrichtung umfasst, rechnergesteuert die zuvor ermittelte, die Textur der Oberfläche imitierende Färbung auf die geflickte Fehlstelle aufgetragen wird.

2. Verfahren gemäß dem vorstehenden Anspruch, **dadurch gekennzeichnet, dass** anhand der Bilddaten die Textur in der Umgebung (58; 62) der Fehlstelle (15, 16) erfasst und eine die Textur der Oberfläche imitierende Färbung ermittelt wird, die eine Textur ergibt, welche vorhandene Texturelemente der Umgebung (58; 62) der Fehlstelle (15, 16) fortsetzt.

3. Verfahren gemäß einem der vorstehenden Ansprüche,
**dadurch gekennzeichnet, dass** folgende Verfahrenschritte durchgeführt werden:
- mit mindestens einem ersten für die Detektion der Fehlstellen (15, 16) erforderlichen bildgebenden Abtaster, werden die Fehlstellen (15, 16) in der texturierten Oberfläche des flächigen Gegenstands ermittelt,
- mit mindestens einem weiteren, vorzugsweise farbtüchtigen bildgebenden Abtaster werden aus dem Gesamtbild der texturierten Oberfläche des flächigen Gegenstands beschreibende Merkmale für den globalen ästhetischen Eindruck, insbesondere für den globalen Farbeindruck und den visuellen Eindruck der Musterung mit Verfahren der automatischen Bildauswertung berechnet,
- unter Nutzung der Positions- und Forminformationen der physikalischen Fehlstellen (15, 16), welche mit dem ersten Abtaster gewonnen wurden, werden aus dem Bild des weiteren Abtasters Bildausschnitte der jeweiligen Fehlstellen (15, 16) gewonnen, wobei diese Bildausschnitte jeweils die Fehlstellen selbst und ihr näheres Umfeld umfassen und aus diesen Bildausschnitten werden mit Verfahren der automatischen Bildauswertung beschreibende Merkmale für den lokalen ästhetischen Eindruck berechnet,
- nach dem Flicken der physikalischen Fehlstellen (15, 16) vorzugsweise durch automatisches Ausfräsen, Einbringen von Spachtelmasse (53) oder Dübel oder anderen physikalischen Reparaturtechnologien wird die Region jeder geflickten Fehlstelle mit einer numerisch positionierbaren, elektronisch bildpunktweise ansteuerbaren Dekorations-Einrichtung unter Nutzung der für den globalen ästhetischen visuellen Eindruck des Panels (11) zuständigen Merkmale als auch der für den lokalen ästhetischen Eindruck der betroffenen Fehlstellen (15, 16) zuständigen Merkmale individuell so dekoriert, daß das Paneel (11) an der Stelle der reparierten Fehlstelle einen einem fehlerlosen Paneel möglichst nahe kommenden visuellen Eindruck aufzeigt und/oder dass das gesamte geflickte Paneel einen durch die Wahl der lokalen Dekorationsmuster hervorgerufenen, gewünschten ästhetischen Gesamteindruck aufzeigt.

4. Verfahren nach einem der vorstehenden Ansprüche
**dadurch gekennzeichnet dass**
die zu flickende Oberfläche eine Naturholzoberfläche oder Natursteinoberfläche ist.

5. Verfahren nach Anspruch 1,
**dadurch gekennzeichnet dass**
die Färbung mittels eines bildpunktweise ansteuerbaren Tintenstrahldruckers aufgetragen wird.

6. Verfahren gemäß einem der vorstehenden Ansprüche,
**dadurch gekennzeichnet, dass** die Recheneinrichtung (46) bei der Ermittlung der die Textur der Oberfläche imitierenden strukturierten Farbgebung Texturelemente in die geflickte Fehlstelle fortsetzt, wobei der Verlauf der Strukturelemente angrenzender intakter Oberflächenbereiche ermittelt und die aufzubringende Farbgebung derart errechnet wird, dass diese Texturelemente enthält, welche an die vorhandenen Texturelemente anschließen.

7. Verfahren nach einem der vorstehenden Ansprüche,
**dadurch gekennzeichnet dass** zum Erreichen eines gewünschten globalen ästhetischen Eindrucks neben den Fehlstellen (15, 16) auch nicht fehlerhafte Stellen lokal dekoriert werden.

8. Verfahren gemäß einem der vorstehenden Ansprüche,
**dadurch gekennzeichnet, dass** mittels der Recheneinrichtung (46) ein Bild der auf die Fehlstelle (15, 16) aufzutragenden Färbung ermittelt wird, indem aus den Bilddaten der Textur ein Bereich geklont wird.

9. Verfahren gemäß einem der vorstehenden Ansprüche,
**dadurch gekennzeichnet, dass** die Recheneinrichtung (46) eine die Textur der Oberfläche imitierende Färbung mit folgenden Schritten rekursiv ermittelt:
- es wird ein Referenz-Ausschnitt (56) der Textur bestimmt,
- zu einem neu zu bestimmenden Bildelement (57) mit einem oder mehreren Pixeln wird eine Umgebung (58; 62) zuvor bereits bestimmter Pixel ausgewählt,
- es wird eine Umgebung im Referenz-Ausschnitt (56) gesucht, welche in den Farbwerten den Farbwerten der Umgebung (58; 62) des neu zu bestimmenden Bildelements (57) so weit entspricht, dass die Abweichung der Farbwerte korrespondierender Pixel kleiner als ein vorbestimmter Grenzwert ist,
- im Referenz-Ausschnitt (56) wird das Bildelement (60) gesucht, welches in örtlicher Relation dem neu zu bestimmenden Bildelement (57) zu dessen zugehöriger Umgebung (58; 62) entspricht, und
- die Farbwerte dieses Bildelements (60) werden dann in das zu bestimmende Texturbild an die entsprechende Stelle bezüglich der Umgebung (58; 62) eingetragen.

10. Verfahren gemäß dem vorstehenden Anspruch, **dadurch**
**gekennzeichnet, dass** vorhandene Texturen aus der Umgebung der Fehlstelle (58; 62) in die Bereiche der Fehlstelle (15, 16) hinein extrapoliert werden, wobei von Bilddaten ausgegangen wird, die neben dem Bereich der Fehlstelle (15, 16) auch angrenzende Bereiche mit der noch vorhandenen Textur enthalten, und wobei bei der Bestimmung der Farbwerte der Umgebung (58; 62) eines neu zu ermittelnden Bildbereichs der Färbung diese Texturbereiche mit in die Umgebungen (58; 62) einbezogen werden, so dass aus dem Referenz-Ausschnitt (56) dann zu dieser noch neben der Fehlstelle (15, 16) vorhandenen Textur passende Bildelemente (60) gesucht und in das Bild der aufzutragenen Färbung eingetragen werden.

11. Automatische Flickvorrichtung zur Ausbesserung von Fehlstellen (15, 16) in texturierten Oberflächen flächiger Gegenstände, mit folgenden Einrichtungen:
- zumindest ein bildgebender Abtaster zum Aufnehmen eines typischerweise digitalen Bildes der texturierten Oberfläche,
- eine Recheneinrichtung (45, 46), welche an den bildgebenden Abtaster angeschlossen ist, so dass die Bilddaten des bildgebenden Abtasters an die Recheneinrichtung (45, 46) übertragen und von dieser ausgewertet werden können, wobei die Recheneinrichtung (45, 46) dazu eingerichtet ist, aus den empfangenen Bilddaten zumindest den Ort, vorzugsweise auch die Größe und/oder die Form einer Fehlstelle (15, 16) zu erfassen, sowie anhand der Bilddaten die Textur der Oberfläche, insbesondere in Umgebung (58; 62) der Fehlstelle (15, 16) zu erfassen, und eine die Textur der Oberfläche imitierende Färbung zu ermitteln,
- eine mit der Recheneinrichtung (45, 46) verbundene automatische Flickeinrichtung, welche die Fehlstelle (15, 16) flickt und welche mit der Recheneinrichtung (45, 46) verbunden ist und von der Recheneinrichtung (45, 46) anhand der von der Recheneinrichtung (45, 46) ermittelten Ortskoordinaten, gegebenenfalls auch der Daten der ermittelten Form und/oder Größe der Fehlstelle (15, 16) angesteuert wird, **dadurch gekennzeichnet, dass**
- mit der Recheneinrichtung (46) eine DekorationsEinrichtung, welche eine Matrixdruck-Vorrichtung umfasst, verbunden ist, um gesteuert durch die Recheneinrichtung (46) die zuvor von der Recheneinrichtung (46) ermittelte, die Textur der Oberfläche imitierende Färbung auf die geflickte Fehlstelle aufzutragen.

12. Automatische Flickvorrichtung nach vorstehendem Anspruch,
**dadurch gekennzeichnet dass**
die automatisch zu flickende Fläche durch folgende Einheiten transportiert und bearbeitet wird:
a) durch mit mindestens einem für die Detektion der Fehlstellen (15, 16) geeigneten bildgebenden Abtaster, welcher mit einer Recheneinheit (45) und einem Bildauswerteprogramm die Fehlstellen (15, 16) detektiert und ihre Form und Position ermittelt sowie die zur automatischen Ausbesserung benötigten Signale
b) durch mindestens einen weiteren, vorzugsweise farbtüchtigen bildgebenden Abtaster, welcher mit der Recheneinheit (46) und einem Bildauswerteprogramm beschreibende Merkmale für den globalen ästhetischen Eindruck, insbesondere für den globalen Farbeindruck und den visuellen Eindruck der Musterung mit einer automatischen Bildauswertung ermittelt,
c) eine Datenübertragung (47), welche Positions- und Forminformationen der Fehlstellen (15; 16) von der Recheneinheit (45) nach a) zur Recheneinheit (46) nach b)
übermittelt,
d) die automatische Flickvorrichtung mit mindestens einer numerisch positionierbaren Einheit zur Ausbesserung der Fehlstellen (15, 16),
e) die Dekorations-Einrichtung mit mindestens einer numerisch positionierbaren und elektronisch ansteuerbaren Dekorationseinheit zur Dekoration der ausgebesserten Fehlstellen mit ästhetischen Muster, welche von der Recheneinheit (46) nach b) ermittelt wurden

## Claims

1. Process for automatically repairing the textured surface of a two-dimensional object, in the course of which
- the textured surface of the two-dimensional object, for example of a panel (11), which has at least one bad area (15, 16) is scanned by means of at least one imaging scanner,
- at least the location, preferably also the size and/or the form, of the bad area (15, 16) are detected with the help of the image data recorded by the imaging scanner by means of a calculating device (45),
- the bad area (15, 16) is repaired by means of a computer controlled repairing tool, for example by applying filler (53), if necessary first removing material from the surface,
- the texture of the surface is detected with the help of the image data, **characterized in that**
- a coloring imitating the texture of the surface is detected by means of the calculating device (46) and
- the previously determined coloring imitating the texture of the surface is applied through computer control to the repaired bad area with a decoration device which comprises a matrix printing device.

2. Process in accordance with the above claim, **characterized in that** the texture in the surrounding area (58; 62) of the bad area (15, 16) is detected with the help of the image data and a coloring imitating the texture of the surface is determined resulting in a texture which continues existing texture elements of the surroundings (58; 62) of the bad area (15, 16).

3. Process in accordance with one of the above claims, **characterized in that** the following procedural steps are carried out:
- with at least one initial imaging scanner required for the detection of the bad areas (15, 16), the bad areas (15, 16) in the textured surface of the two-dimensional object are determined,
- with at least one further, preferably color-capable imaging scanner, descriptive characteristics are calculated from the overall image of the textured surface of the two-dimensional object for the global aesthetic impression, in particular for the global color impression and the visual impression of the examination, using automatic image analysis processes,
- using the position and form information of the physical bad areas (15, 16) obtained using the first scanner, image details of the relevant bad areas (15, 16) are obtained from the image of the further scanner, whereby these image details respectively comprise the bad areas themselves and their immediate surroundings, and from these image details descriptive characteristics are calculated for the local aesthetic impression, using automatic image analysis processes,
- after the physical bad areas (15, 16) have been repaired, preferably by milling them out automatically,
application of filler (53) or dowels or other physical repair technologies, the area around each repaired bad area is decorated individually with a numerically positionable, electronically pixel-wise addressable decorating device using the characteristics responsible for the global aesthetic visual impression of the panel (11) as well as the characteristics responsible for the local aesthetic impression of the bad areas affected (15, 16) in such a way that at the location of the repaired bad area, the panel (11) makes a visual impression coming as close as possible to that of a flawless panel and/or that the entire repaired panel makes the desired aesthetic overall impression thanks to the choice of the local decoration pattern.

4. Process in accordance with one of the above claims,
**characterized in that**
the surface to be repaired is a natural wood surface or a natural stone surface.

5. Process in accordance with claim 1, **characterized in that** the coloring is applied by means of an inkjet printer that can be addressed pixel-wise.

6. Process in accordance with one of the above claims, **characterized in that**, in the determination of the structured coloring imitating the texture of the surface, the calculating device (46) continues texture elements in the repaired bad area, whereby the characteristics of the structure elements of adjacent intact surface areas are determined and the coloring to be applied is calculated in such a way that it contains texture elements which match the existing texture elements.

7. Process in accordance with one of the above claims, **characterized in that** besides the bad areas (15, 16), non-defective areas are also decorated locally in order to achieve the desired global aesthetic impression.

8. Process in accordance with one of the above claims, **characterized in that**, by means of the calculating device (46), an image of the coloring to be applied to the bad area (15, 16) is obtained by cloning an area from the image data of the texture.

9. Process in accordance with one of the above claims, **characterized in that** the calculating device (46) recursively determines a coloring imitating the texture of the surface by means of the following steps:
- a reference section (56) of the texture is determined,
- for a new image element (57) to be determined, with one or more pixels, a surrounding area (58; 62) of previously determined pixels is selected,
- in the reference section (56) a surrounding area is searched for whose color values correspond to the color values of the surrounding area (58; 62) of the new image element to be determined (57) to such an extent that the deviation in the color values of corresponding pixels is less than a predetermined limit value,
- in the reference section (56) the image element (60) which corresponds to the local relationship between the new image element to be determined (57) and its appropriate surrounding area (58; 62) is searched for,
and
- the color values of this image element (60) are then entered into the texture image to be determined, in the appropriate place with respect to the surrounding area (58; 62).

10. Process in accordance with the above claim, **characterized in that** existing textures from the surroundings of the bad area (58; 62) are extrapolated into the regions of the bad area (15, 16), whereby image data are used which contain not only the region of the bad area (15, 16) but also adjacent regions with the still existent texture, and whereby, in the determination of the color values of the surrounding area (58; 62) of a new image area to be determined, the coloring of these texture regions is included in the surrounding areas (58; 62), so that from the reference section (56) image elements (60) matching the texture still existing beside the bad area (15, 16) are searched for and entered into the image of the coloring to be applied.

11. Automatic repair device for mending bad areas (15, 16) in the textured surfaces of two-dimensional objects, with the following devices:
- at least one imaging scanner for recording a typically digital image of the textured surface,
- a calculating device (45, 46) which is connected to the imaging scanner so that the image data of the imaging scanner can be transmitted to the calculating device (45, 46) and analyzed by the latter, whereby the calculating device (45, 46) is set up to determine at least the location, preferably also the size and/or the form of a bad area (15, 16) from the image data received, and to determine the texture of the surface, in particular in the surroundings (58; 62) of the bad area (15, 16) on the basis of the image data, and to determine a coloring imitating the texture of the surface,
- an automatic repair device which is connected to the calculating device (45, 46) and which repairs the bad area (15, 16) and which is connected to the calculating device (45, 46) and which is addressed by the calculating device (45, 46) with the help of the local coordinates determined by the calculating device (45, 46), if necessary also with the help of the data concerning the determined form and/or size of the bad area (15, 16), **characterized in that**
- a decorating device which comprises a matrix printing device is connected to the calculating device (46), and is controlled by the calculating device (46) to apply to the repaired bad area the coloring which was previously determined by the calculating device (46) and which imitates the texture of the surface.

12. Automatic repair device in accordance with the above claim, **characterized in that** the surface to be repaired is transported and processed by the following units:
a) by at least one imaging scanner suitable for the detection of bad areas (15, 16), which detects the bad areas (15, 16) with a calculating device (45) and an image analysis program and determines their form and position, as well as the signals required for automatic repair
b) by at least one further, preferably color-capable imaging scanner, which, by means of the calculating device (46) and an image analysis program, determines descriptive characteristics for the global aesthetic impression, in particular for the global color impression and the visual impression of the examination, using automatic image analysis processes,
c) a data transmission system (47), which transmits position and form information relating to the bad areas (15; 16) from the calculating device (45) in accordance with a) to the calculating device (46) in accordance with b),
d) the automatic repair device with at least one numerically positionable unit for repairing the bad areas (15, 16),
e) the decoration device with at least one numerically positionable and electronically addressable decoration unit for decorating the repaired bad areas with aesthetic patterns which were determined by the calculating device (46) in accordance with b) .

## Revendications

1. Procédé de réparation automatique d'une surface texturée d'un objet plan, consistant à
- détecter la surface texturée présentant au moins une zone défectueuse (15, 16) de l'objet plan, comme par exemple un panneau (11) à l'aide d'au moins un analyseur d'images,
- détecter, au moyen d'un dispositif de calcul (45), au moins l'emplacement, ainsi que de préférence la taille et/ou la forme de la zone défectueuse (15, 16), grâce aux données d'images enregistrées par l'analyseur d'images,
- réparer la zone défectueuse (15, 16) au moyen d'un outil de réparation assisté par ordinateur, par exemple en ajoutant un mastic (53) en ayant retiré éventuellement au préalable de la matière de surface,
- détecter la texture de la surface à l'aide des données d'image, le procédé étant **caractérisé en ce que**
- au moyen du dispositif de calcul (46), une coloration imitant la texture de la surface est déterminée et
- avec un dispositif de décoration, qui comprend un dispositif d'impression matricielle, la coloration imitant la texture de la surface, précédemment déterminée, est appliquée à commande par ordinateur sur la zone défectueuse réparée.

2. Procédé selon la revendication précédente, **caractérisé en ce que**, à l'aide des données d'image, la texture dans l'environnement (58 ; 62) de la zone défectueuse (15, 16) est détectée et une coloration imitant la texture de la surface est déterminée, ladite coloration donnant une texture qui suit les éléments de texture existants de l'environnement (58 ; 62) de la zone défectueuse (15, 16).

3. Procédé selon l'une des revendications précédentes, **caractérisé en ce que** les étapes de procédé suivantes sont réalisées :
- avec au moins un premier analyseur d'images requis pour la détection des zones défectueuses (15, 16), les zones défectueuses (15, 16) sont déterminées dans la surface texturée de l'objet plan,
- avec au moins un autre analyseur d'images, de préférence sensible aux couleurs, des caractéristiques descriptives pour l'aspect esthétique global, en particulier pour l'impression de couleur globale et l'aspect visuel du motif avec le procédé d'évaluation automatique des images sont calculées à partir de l'image globale de la surface texturée de l'objet plan,
- en utilisant les informations de position et de forme des zones défectueuses physiques (15, 16), qui ont été obtenues avec le premier analyseur, des cadrages des différentes zones défectueuses (15, 16) sont obtenus à partir de l'image de l'autre analyseur, ces cadrages englobant les zones défectueuses en elles-mêmes et leur environnement proche et des caractéristiques descriptives pour l'aspect esthétique local étant calculées à partir de ces cadrages avec le procédé d'évaluation automatique des images,
- après la réparation des zones défectueuses physiques (15, 16), de préférence par fraisage automatique,
application de mastic (53) ou de chevilles ou
par d'autres technologies de réparation physiques, la région de chaque zone défectueuse réparée est décorée individuellement avec un dispositif de décoration à positionnement numérique et commande électronique par point d'image en utilisant les caractéristiques associées à l'aspect visuel esthétique global du panneau (11) ainsi qu'à l'aspect esthétique global des zones défectueuses concernées (15, 16), de telle sorte que le panneau (11) présente à la place de la zone défectueuse réparée un aspect visuel se rapprochant le plus possible d'un panneau sans défaut et/ou de sorte que le panneau réparé dans son ensemble présente un aspect esthétique global souhaité, dû au choix du motif décoratif local.

4. Procédé selon l'une des revendications précédentes, **caractérisé en ce que** la surface à réparer est une surface en bois naturel ou une surface en pierre naturelle.

5. Procédé selon la revendication 1, **caractérisé en ce que** la coloration est appliquée au moyen d'une imprimante à jet d'encre à commande par point d'image.

6. Procédé selon l'une des revendications précédentes, **caractérisé en ce que** le dispositif de calcul (46) continue les éléments de texture dans la zone défectueuse réparée lors de la détermination de la coloration structurée imitant la texture de la surface, l'étendue des éléments de structure des régions superficielles intactes voisines étant déterminée et la coloration à appliquer étant obtenue de telle façon que celle-ci comprend des éléments de texture qui sont contigus aux éléments de texture existants.

7. Procédé selon l'une des revendications précédentes, **caractérisé en ce que** pour obtenir un aspect esthétique global souhaité, des zones non défectueuses sont également décorées localement à côté des zones défectueuses (15, 16).

8. Procédé selon l'une des revendications précédentes, **caractérisé en ce que**, au moyen du dispositif de calcul (46), une image de la coloration à appliquer sur la zone défectueuse (15, 16) est déterminée, en clonant une région à partir des données d'image de la texture.

9. Procédé selon l'une des revendications précédentes, **caractérisé en ce que** le dispositif de calcul (46) détermine de manière récursive une coloration imitant la texture de la surface avec les étapes suivantes :
- un cadre de référence (56) de la texture est déterminé,
- pour un élément d'image à déterminer à nouveau (57) avec un ou plusieurs pixels, un environnement (58 ; 62) des pixels déjà déterminés précédemment est sélectionné,
- un environnement est recherché dans le cadrage de référence (56), lequel environnement dans les valeurs de couleur correspond suffisamment aux valeurs de couleur de l'environnement (58 ; 62) de l'élément à déterminer de nouveau (57) pour que l'écart des valeurs de couleur des pixels correspondants soit inférieur à une valeur limite prédéterminée,
- l'élément d'image (60) est recherché dans le cadrage de référence (56), lequel élément d'image dans la relation locale correspond à l'élément d'image (57) à déterminer de nouveau pour son environnement (58 ; 62) associé, et
- les valeurs de couleur de cet élément d'image (60) sont ensuite intégrées dans l'image de texture à déterminée au niveau de la zone correspondante par rapport à l'environnement (58 ; 62).

10. Procédé selon la revendication précédente, **caractérisé en ce que** les textures existantes sont extrapolées à partir de l'environnement de la zone défectueuse (58 ; 62) dans les régions de zones défectueuses (15, 16), à partir de données d'image qui comprennent outre la région de la zone défectueuse (15, 16) des régions contiguës avec la texture encore existante, et lors de la détermination des valeurs de couleur de l'environnement (58 ; 62) d'une zone d'image à déterminer de nouveau de la coloration, ces régions de texture sont intégrées dans les environnements (58; 62) de sorte qu'à partir du cadrage de référence (56) des éléments d'image (60) adaptés à cette texture existante encore à côté de la zone défectueuse (15, 16) sont recherchés et sont intégrés dans l'image de la coloration à appliquer.

11. Dispositif de réparation automatique pour réparer les zones défectueuses (15, 16) dans des surfaces texturées d'objets plans, doté des installations suivantes :
- au moins un analyseur d'images pour l'enregistrement d'une image numérique classique de la surface texturée,
- un dispositif de calcul (45, 46), qui est raccordé à l'analyseur d'images, de sorte que les données d'images de l'analyseur d'images peuvent être transmises au dispositif de calcul (45, 46) et être évaluées par celui-ci, le dispositif de calcul (45, 46) étant conçu pour détecter au moins l'emplacement, de préférence également la taille et/ou la forme d'une zone défectueuse, à partir des données d'images reçues, et pour détecter à l'aide des données d'images la texture des surfaces, en particulier dans l'environnement (58 ; 62) de la zone défectueuse (15, 16), et pour déterminer une coloration imitant la texture de la surface,
- un dispositif de réparation automatique relié au dispositif de calcul (45, 46), qui répare la zone défectueuse (15, 16) et qui est relié au dispositif de calcul (45, 46) et est commandé par le dispositif de calcul (45, 46) à l'aide des coordonnées dans l'espace déterminées par le dispositif de calcul (45, 46), éventuellement également à l'aide des données de la forme et/ou de la taille de la zone défectueuse (15, 16) déterminées, **caractérisé en ce que**
- un dispositif de décoration qui comprend un dispositif d'impression matricielle est relié au dispositif de calcul (46), pour appliquer de manière commandée par le dispositif de calcul (46) la coloration imitant la texture de la surface déterminée auparavant par le dispositif de calcul sur la zone défectueuse réparée.

12. Dispositif de réparation automatique selon la revendication précédente, **caractérisé en ce que** la surface à réparer automatiquement est transportée et traitée par les unités suivantes :
a) par au moins un analyseur d'images conçu pour la détection des zones défectueuses (15, 16), qui détecte les zones défectueuses (15, 16) avec une unité de calcul (45) et un programme d'évaluation des images et détermine leur forme et leur position ainsi que les signaux nécessaires pour la réparation automatique
b) par au moins un autre analyseur d'images, de préférence sensible aux couleurs, qui détermine avec l'unité de calcul (46) et un programme d'évaluation d'images des caractéristiques descriptives pour l'aspect esthétique global, en particulier pour l'impression de couleur globale et l'aspect visuel du motif avec une évaluation automatique des images,
c) un transfert de données (47), qui transmet les informations de position et de forme des zones défectueuses (15 ; 16) de l'unité de calcul (45) selon a) à l'unité de calcul (46) selon b),
d) le dispositif de réparation automatique avec au moins une unité à positionnement numérique pour la réparation des zones défectueuses (15, 16),
e) le dispositif de décoration avec au moins une unité de décoration à commande électronique et positionnement numérique pour la décoration des zones défectueuses réparées avec des motifs esthétiques, qui ont été déterminés par l'unité de calcul (46) selon b).
